# EUROPÄISCHE PATENTANMELDUNG

(11) **EP 1 421 882 A1**
(43) Veröffentlichungstag der Anmeldung: **26.05.2004**
(21) Anmeldenummer: 03026476.6
(22) Anmeldetag: 20.11.2003
(51) Int. Cl.: A47G 19/00, A47G 23/06

(54) **Auflagenvorrichtung für Lebensmittel**

(30) Priorität: 15.03.2003 DE 20304186 U; 21.11.2002 DE 20218127 U
(71) Anmelder: EHNLE, REINHARD, 70565 STUTTGART (DE)
(72) Erfinder: EHNLE, REINHARD, 70565 STUTTGART (DE)
(74) Vertreter: KOHLER SCHMID + PARTNER

(57) **Zusammenfassung**

Eine Auflagevorrichtung (1) für Lebensmittel weist eine Auflageplatte (2) und mindestens einen von der Auflageplatte (2) hochstehenden Abstandhalter (5) aus lebensmittelgerechtem Material auf, dessen Höhe größer als die auf der Auflageplatte (2) vorgesehenen Lebensmittel (3) ist.

## Beschreibung

Die Erfindung betrifft eine Auflagevorrichtung für Lebensmittel mit einer Auflageplatte.

### Stand der Technik:

Bei kalten Platten und bei Kuchen- und Tortenplatten wird nach dem Anrichten mit einer Klarsichtfolie die Platte abgedeckt. Diese Abdeckung ist als Schutz gegen Austrocknung bei der anschließenden Kühlung z. B. im Kühlschrank erforderlich. Dabei ist immer die Gefahr, daß Speisen bzw. Garnierung mit der Abdeckfolie in Berührung kommen und die Optik verderben. Jeder Koch bzw. Konditor ist stolz auf seine Arbeit, aber enttäuscht, wenn sie zerstört wird.

Der Erfindung liegt demgegenüber die Aufgabe zugrunde, einer verbesserten Auflage für Lebensmittel bereit zu stellen.

### Lösung des Problems:

Diese Aufgabe wird erfindungsgemäß gelöst durch mindestens einen von der Auflageplatte hochstehenden Abstandhalter (Röhrchen 8 und Stahlseele 11) aus lebensmittelgerechtem Material, dessen Höhe größer als die auf der Auflageplatte vorgesehenen Lebensmittel ist.

Der Abstandhalter dient zur Distanzgewahrung zwischen auf einer Platte dekorierten Lebensmitteln und der zum Schutz darüber gelegten Klarsichtfolie. Vorteilhafte Ausgestaltungen der erfindungsgemäßen Auflagenvorrichtung sind Gegenstand der Unteransprüche.

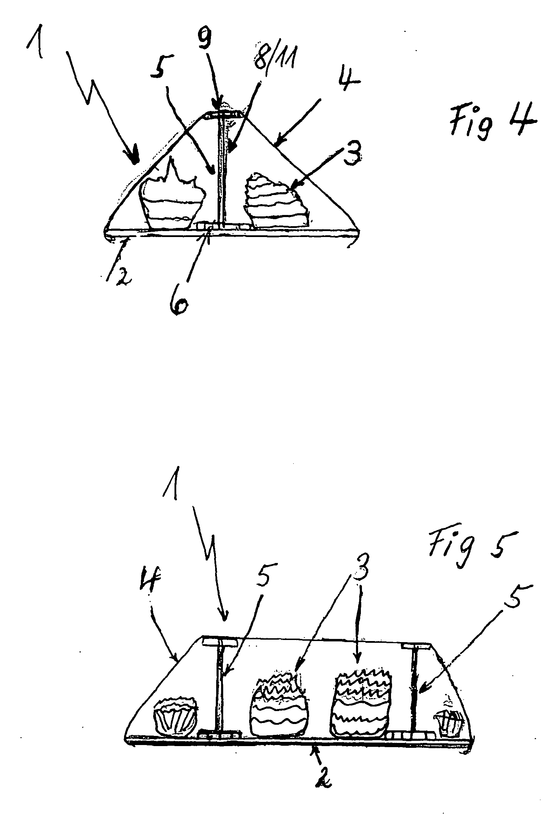

Es zeigen:

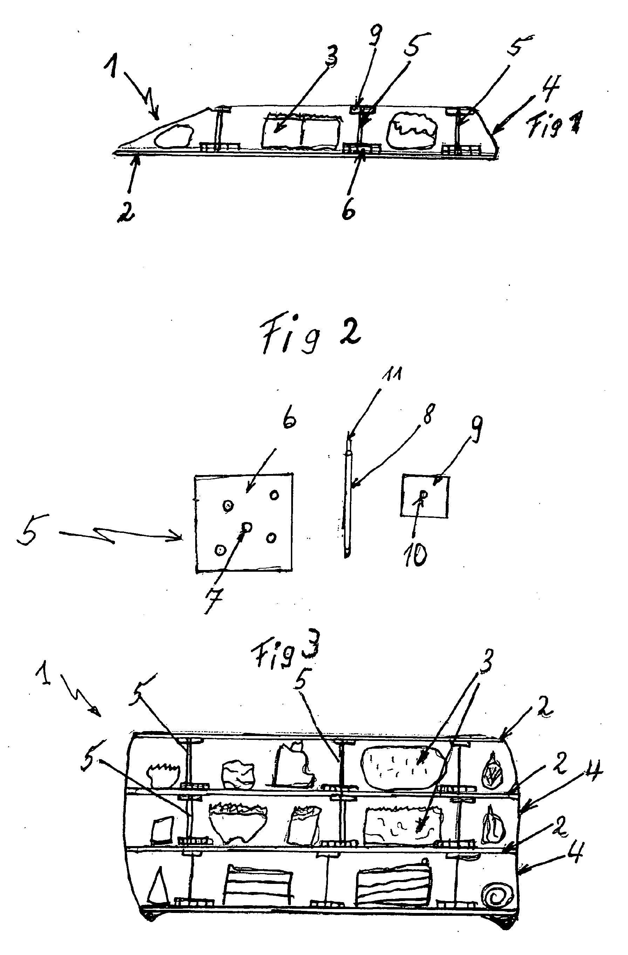

- Fig. 1: die erfindungsgemäße Auflagevorrichtung mit zwei Abstandhaltern in einer Seitenansicht;
1 = Auflagevorrichtung
2 = Auflageplatte
3 = Lebensmittel
4 = Abdeckfolie
5 = Abstandhalter
9 = Kopfplatte
Fig. 2 die Einzelteile eines steckbaren Abstandhalters;
6 = Grundplatte
7 = Stecköffnung in Grundplatte
8 = röhrchenförmiges Abstandelement mit Stahlseele = 11
9 = Kopfplatte
10= Stecköffnung in Kopfplatte je nach Anwendung können bis zu vier Abstandhalter in einer Grundplatte eingesteckt werden.
Fig. 3 mehrere, mittels Abstandhaltern aufeinander gestapelte Auflageplatten mit Auflagevorrichtungen;
1 = Auflagevorrichtung
2 = Auflageplatte
3 = Lebensmittel
4 = Abdeckfolie
5 = Abstandhalter
- Fig. 4: eine modifizierte Auflagevorrichtung, bei der die Lebensmittel auf der Fußnlatte des Abstandhalters angeordnet sind.
1 = Auflagevorrichtung
2 = Auflageplatte
3 = Lebensmittel
4 = Abdeckfolie
5 = modifizierter Abstandhalter (Überlänge)
6 = Auflageplatte
8 = Abstandelement mit Stahlseele (11)
9 = Kopfplatte
- Fig. 5: 2 = Auflagenplatte
3 = Lebensmittel
4 = Abdeckfolie
5 = Abstandhalter mit Stahlseele (ohne Röhrchen)

Bereits beim Anrichten auf der Platte werden zwischen die einzelnen Lebensmittel (3 Wurst, Fisch, Häppchen, Schnittchen oder Kuchen) die Grundplatten (6) für die Abstandelemente (8/11) gelegt. Sie sind ca.60 bis 80 mm in der Fläche und aus lebensmittelgerechtem Material gefertigt. In diese Grundplatten (6) sind Löcher (7) zum Einstecken der Abstandelemente (8/11) gebohrt. Auf der Unterseite sind sie mit einem nicht rutschenden Belag versehen. Ein Permanentmagnet hält sie auf Metallplatten an der gewünschten Stelle. Je nach Bedarf können bei diesem System eine oder auch mehrere Grundplatten (6) z.B. nur in der Mitte und / oder an den Rändern verwendet werden. Da schon vor dem Verteilen der Speisen die Grundplatten(6) auf der Auflageplatte (2)verteilt wurden, können nach dem Garnieren die Abstandelemente (8/11) in die Löcher der Grundplatte (6) gesteckt und als Abschluß die Kopfplatte (9) aufgesteckt werden. Nun können die fertig garnierten Platten ohne das Risiko des Berührens oder der Beschädigung mit der Schutzfolie abgedeckt werden, um ein Austrocknen zu verhindern.

Nach dem Kühlen und vor dem Servieren, wird die Abdeckfolie (4) abgenommen und die Kopfplatte (9) und das Abstandhalterelement (8/11) entfernt. Nachdem die Auflageplatte (2) abgeräumt ist, kann auch die Grundplatte (1) zusammen mit den anderen Teilen in der Spülmaschine gereinigt und wieder verwendet werden.

Die Grundplatte (6), das Abstandhalterelement (8/11) und die Kopfplatte (9) bilden zusammen den Abstandhalter (5).
Durch die Kombination von variabel zu verteilenden Grundplatten und den sich daraus ergebenden Möglichkeiten, ist das Problem optimal gelöst.
Es kann auch nur die Stahlseele (11) allein als Abstandelement verwendet werden.

## Patentansprüche

1. Auflagevorrichtung (1) für Lebensmittel mit einer Auflageplatte (2), **gekennzeichnet** mindestens einen von der Auflageplatte (2) hochstehenden Abstandhalter (5) aus lebensmittelgerechtem Material, dessen Höhe größer als die auf der Auflageplatte (2) vorgesehenen Lebensmittel (3) ist.

2. Auflagevorrichtung nach Anspruch 1, **dadurch gekennzeichnet, dass** die Lebensmittel (3) von einer Abdeckfolie (4) abgedeckt sind, die auf dem bzw. den Abstandhaltern (5) und der Kopfplatte (9) aufliegt.

3. Auflagevorrichtung nach Anspruch 1 oder 2, **dadurch gekennzeichnet, dass** die Unterseite des bzw. jedes Abstandhalters (5) einen rutschfesten Belag aufweist, oder andere rutschhemmende Merkmale aufweist, z.B. Noppen.

4. Auflagevorrichtung nach einem der vorhergehenden Ansprüche, **dadurch gekennzeichnet, dass** jede Fußplatte (6) und jede Kopfplatte (9) mit einem Permanentmagnet versehen ist, oder andere rutschhemmende Merkmale aufweist, z.B. Noppen.

5. Auflagevorrichtung nach einem der vorhergehenden Ansprüche, **dadurch gekennzeichnet, dass** eine oder mehrere Auflageplatten (2) auf mindestens drei Abstandhaltern (5) aufliegt, wenn zwei Anrichtplatten zusammen, übereinander als Verbund, verpackt werden.

6. Auflagevorrichtung nach einem der vorhergehenden Ansprüche, **dadurch gekennzeichnet, dass** der bzw. die Abstandhalter (5) am oberen Ende eine Auflageplatte (9) aufweisen.

7. Auflagevorrichtung nach einem der vorhergehenden Ansprüche, **dadurch gekennzeichnet, dass** die Auflageplatte (9) auf dem Abstandhalter (5) aufgesteckt ist.

8. Auflagevorrichtung nach Anspruch 6 oder 7, **dadurch gekennzeichnet, dass** die Oberseite der Auflageplatte (9) einen rutschfesten Belag aufweist, oder andere rutschhemmende Merkmale aufweist, z. B Noppen.

9. Auflagevorrichtung nach einem der vorhergehenden Ansprüche, **dadurch gekennzeichnet, dass** der Abstandhalter (5) eine Fußplatte (6) mit einer oder mehreren Stecköffnungen (7)versehen ist, in die ein oder mehrere Abstandelemente eingesteckt werden.

10. Auflagevorrichtung nach einem der vorhergehenden Ansprüche, **dadurch gekennzeichnet, dass** der Abstandhalter (5) ein Röhrchen (8) und eine insbesondere herausnehmbare Stahlseele (11) aufweist.
